(19) Europäisches Patentamt
European Patent Office
Office européen des brevets

(11) **EP 1 628 056 B1**

(12) **EUROPEAN PATENT SPECIFICATION**

(45) Date of publication and mention
of the grant of the patent:
**24.10.2007 Bulletin 2007/43**

(51) Int Cl.:
*F16K 17/04* *(2006.01)*          *F16K 15/02* *(2006.01)*

(21) Application number: **05017033.1**

(22) Date of filing: **04.08.2005**

(54) **Check valve**

Rückschlagventil

Clapet anti-retour

(84) Designated Contracting States:
**DE FR IT**

(30) Priority: **18.08.2004   JP 2004238432**

(43) Date of publication of application:
**22.02.2006   Bulletin 2006/08**

(73) Proprietor: **KABUSHIKI KAISHA TOYOTA JIDOSHOKKI**
**Kariya-shi,**
**Aichi-ken (JP)**

(72) Inventors:
 • **Okuda, Motoaki**
**Kariya-shi,**
**Aichi-ken (JP)**
 • **Kurita, Hajime**
**Kariya-shi,**
**Aichi-ken (JP)**
 • **Murase, Masakazu**
**Kariya-shi,**
**Aichi-ken (JP)**

(74) Representative: **TBK-Patent**
**Bavariaring 4-6**
**80336 München (DE)**

(56) References cited:
**DE-A1- 3 120 606          DE-A1- 19 540 529**
**DE-U1- 20 108 618          GB-A- 884 537**

 • **PATENT ABSTRACTS OF JAPAN vol. 2000, no. 15, 6 April 2001 (2001-04-06) & JP 2000 346217 A (TOYOTA AUTOM LOOM WORKS LTD), 15 December 2000 (2000-12-15)**

**Description**

BACKGROUND

The present invention relates to a check valve according to the preamble of claim 1.

A check valve serves as a means for preventing backward flow of fluid by allowing the fluid to flow in one direction only in a fluid passage. One type of check valve is provided such that a valve body is fitted in a case through which a communication opening is formed.

The present assignee has proposed various check valves which can inhibit valve hunting and hence reduce the development of noise and vibration and pressure loss in a compressor in which a check valve is used, a refrigeration circuit and vehicle.

DE-A-31 20 606 shows a generic check valve comprising a valve housing, a valve body and an urging member. The valve housing has a peripheral wall and a valve seat. The peripheral wall has an opening therethrough for fluid communication. The opening is located more downstream than the valve seat. The peripheral wall also has an inner peripheral surface. The valve body is disposed slidably in the valve housing and have an outer peripheral surface which is fitted in the inner peripheral surface of the valve housing. The valve body also have a sealing surface which is seated on the valve seat when the valve body is slid in a first direction. The sealing surface is spaced away from the valve seat when the valve body is slid in a second direction which is an opposite to the first direction. The urging member is disposed in the valve housing for urging the valve body in the first direction. The end of the opening on the side of the valve seat is spaced at a predetermined length in the second direction from the valve seat. A first throttle is formed in a space between the inner peripheral surface of the valve housing and the outer peripheral surface of the valve body until the valve body is slid in the second direction for the predetermined length from the state in which the valve body is seated on the valve seat. The valve body has a protrusion that protrudes from the inside of a portion of the sealing surface which is contacted with the valve seat. At least when the sealing surface is contacted with the valve seat, an outer peripheral surface of the protrusion is fitted in an inner peripheral surface of a flow passage of the valve housing between the valve seat and a suction port. A second throttle is formed in a space between the outer peripheral surface of the protrusion and the inner peripheral surface of the flow passage. An area of the cross section of the second throttle as seen in the second direction is smaller than that of the first throttle.

DE-A-195 40 529 and GB-A-884 537 show check valves in which in general one throttle portion for preventing a development of noise and vibration of the check valve are provided.

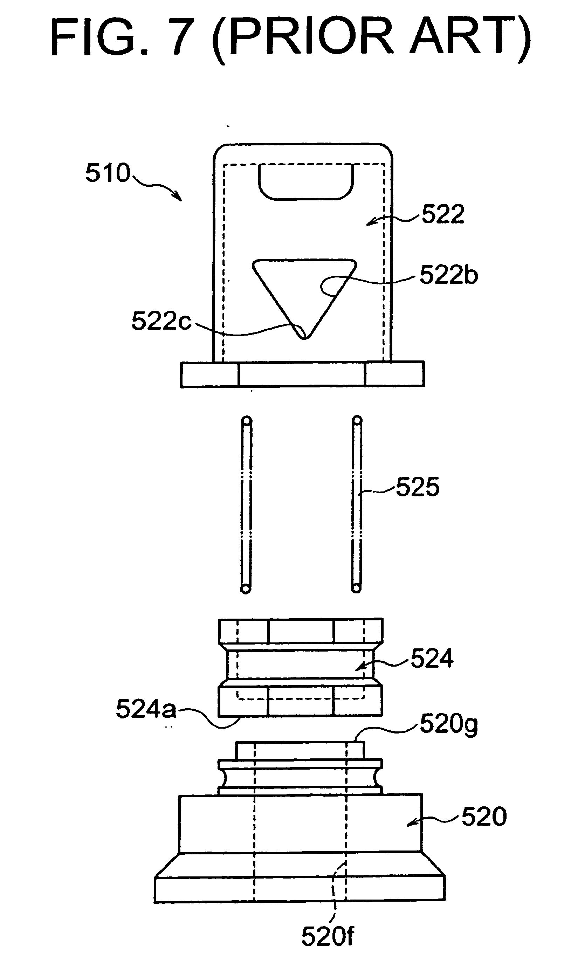

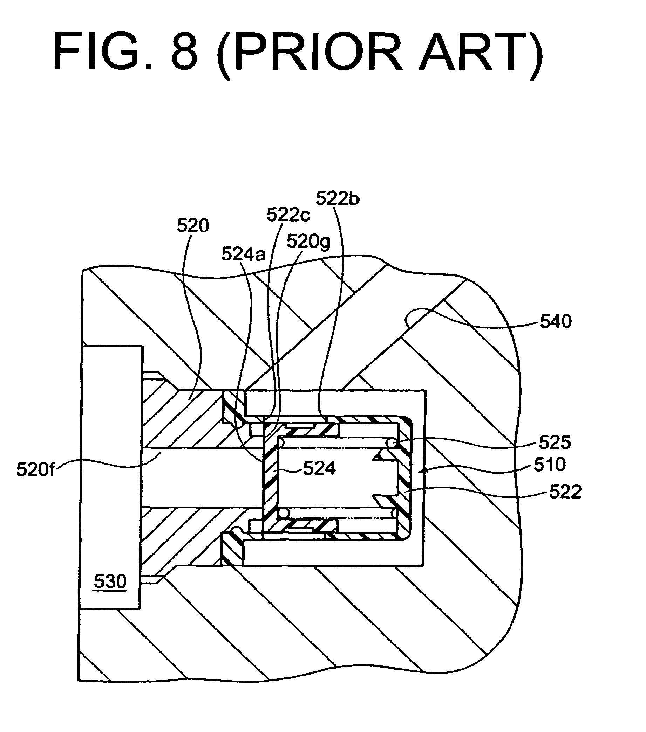

Another of such check valves is disclosed by JP-A-2000-346217. Referring to FIGS. 7 and 8, the structure and operation of this prior art check valve will be described. FIG 7 shows the structure of a check valve 510, which includes a valve seat member 520, a case 522, a valve body 524 and a spring 525. The valve seat member 520 has a flow passage 520f through which fluid is flowed into the check valve 510. The valve body 524 is inserted into the case 522 together with the spring 525 which urges the valve body 524 toward the valve seat member 520. With the case 522 mounted over the valve seat member 520, the valve body 524 is urged and to be pressed against the valve seat member 520 by the spring 525. The case 522 has a communication opening 522b through which the fluid freely flows into and out of the case 522.

FIG 8 shows a longitudinal sectional view of the check valve 510 in its closed state. Reference numerals 530, 540 designate a discharge port and a discharge passage, respectively, of a compressor in which the check valve 510 is incorporated. The fluid passes through the discharge port 530, the flow passage 520f, the opening 522b and the discharge passage 540 in this order. In the state where the opening 522b of the check valve 510 is closed as shown in FIG. 8, the valve body 524 is pressed against the valve seat member 520 by urging force of the spring 525 with a sealing surface 524a of the valve body 524 pressed in sealingly tight contact with a seat surface 520g of the valve seat member 520. In addition, the valve body 524 is movable such that the opening 522b is closed by the valve body 524 thereby to prevent the fluid from flowing through the opening 522b.

The pressure of fluid in the flow passage 520f acts on the valve body 524 so as to move the sealing surface 524a of the valve body 524 away from the valve seat member 520. The movement of the valve body 524 depends on the pressure difference between this pressure in the flow passage 520f and the pressure of fluid in the discharge passage 540. To be more specific, when the force caused by the pressure difference is greater than the urging force of the spring 525, the valve body 524 moves rightward as seen in FIG. 8, or in the direction which causes the valve body 524 to move away from the valve seat member 520, thus a space being formed between the sealing surface 524a and the valve seat member 520. With further movement of the valve body 524, the opening 522b which had been completely closed by the valve body 524 is opened in the vicinity of an end 522c of the opening 522b thereby to allow the fluid to flow through the opening 522b.

However, the above-described prior art check valve 510 has had a problem of hunting when the flow rate in the valve is relatively small and hence a problem of poor stability in operation of the valve. In such check valve 510, the opening 522b is opened by a slight movement of the valve body 524 from the position where the sealing surface 524a is seated on the seat surface 520g, so that the opening area of the opening 522b is increased rapidly even when the flow rate is relatively small. This causes the fluid to flow excessively through the opening 522b, which rapidly reduces the aforementioned pressure difference and, therefore, the valve body 524 is moved by the urging force of the spring 525 in the direction which causes the valve body 524 to close the opening 522b. Thus, the valve body 524 is reciprocated repeatedly when the opening area of the opening 522b is relatively small. Such hunting phenomenon causes development of abnormal sound and vibration of the check valve.

SUMMARY

It is an object of the invention to further develop a check valve according to the preamble of claim 1 which inhibits valve hunting and reduces the development of noise and vibration of the check valve.
This object is achieved with a check valve having the features of claim 1.
Further advantageous developments are defined in the dependent claims.
The check valve of the present invention includes a valve housing, a valve body and an urging member. The valve housing has a peripheral wall and a valve seat. The peripheral wall has an opening therethrough for fluid communication. The opening is located more downstream than the valve seat. The peripheral wall also has an inner peripheral surface. The valve body is disposed slidably in the valve housing and has an outer peripheral surface which is fitted in the inner peripheral surface of the valve housing. The valve body also has a sealing surface which is seated on the valve seat when the valve body is slid in a first direction. The sealing surface is spaced away from the valve seat when the valve body is slid in a second direction which is opposite to the first direction. The urging member is disposed in the valve housing for urging the valve body in the first direction. The end of the opening on the side of the valve seat is spaced at a predetermined length in the second direction from the valve seat. A first throttle is formed in a space between the inner peripheral surface of the valve housing and the outer peripheral surface of the valve body until the valve body is slid in the second direction for the predetermined length from the state in which the valve body is seated on the valve seat.
Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention, together with the object and advantages thereof, may best be understood by reference to the following description of the presently preferred embodiments, together with the accompanying drawing, in which:

FIG 1 is a longitudinal view showing a check valve according to an example which is not claimed;

FIG 2 is a longitudinal view showing a check valve according to a preferred embodiment of the present invention;

FIG 3 is a graph showing measurement result for the case that the cross sectional area of a throttle of the test check valve according to the example is 8.17 mm$^2$;

FIG 4 is a graph showing measurement result for the case that the cross sectional area of a throttle of the test check valve according to the example is 6.13 mm$^2$;

FIG 5 is a graph showing measurement result for the case that the cross sectional area of a throttle of the test check valve according to the example is 4.08 mm$^2$;

FIG 6 is a graph showing measurement result for the case that the cross sectional area of a throttle of the test check valve according to the example is 2.04 mm$^2$;

FIG. 7 is a view showing a prior art check valve; and

FIG. 8 is a longitudinal sectional view showing the prior art check valve.

DETAILED DESCRIPTION OF THE PREFERRED EMBODIMENTS

The following will describe examples and a preferred embodiment of the present invention with reference to the attached drawings.
A check valve 10 according to an example which is not claimed will now be described with reference to FIG.

1. The check valve 10 includes a valve seat member 20, a case 22, a spool 24 and a spring 25. The case 22 is fitted over the valve seat member 20. The spool 24 that serves as a valve body of the check valve is disposed slidably in the case 22. The spring 25 that serves as an urging member urges the spool 24 toward the valve seat member 20 in the case 22. The valve seat member 20 and the case 22 cooperate to form a valve housing. Thus providing the valve seat member 20 and the case 22 separately helps to facilitate the manufacturing of the check valve 10 and hence to reduce the manufacturing cost thereof. The valve seat member 20, the case 22, the spool 24 and the spring 25 are made of brass.

The valve seat member 20 has a suction port 20h and a flow passage 20f through which the fluid flowed from the suction port 20h passes. The valve seat member 20 also has a seat portion 20e which is provided in the form of a circumferential valve seat 20g having a predetermined width.

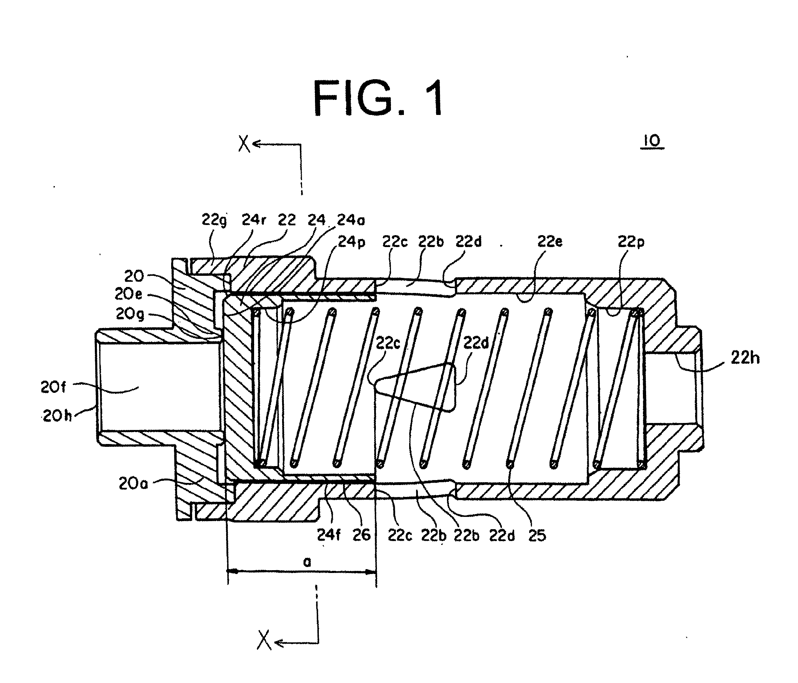

The case 22 has formed at one end thereof a flange 22g within which the valve seat member 20 is fitted. The case 22 also has formed through the peripheral wall thereof at least one communication opening 22b. In FIG 1, four openings 22b are formed circumferentially equidistantly in the peripheral wall at a predetermined interval. Each opening 22b is formed substantially in an isosceles triangle whose corners are rounded. The isosceles triangle has a side 22d which extends in parallel to the valve seat 20g, and an apex angle 22c which is located on the side adjacent to the valve seat member 20. The angles formed at the opposite ends of the side 22d are substantially the same. The above opening 22b is easily designed and practical.

The opened area of four openings 22b is approximately 30 mm$^2$ in total. Further, the case 22 has a through hole 22h which allows the fluid to be flowed into and out of the case 22 to achieve smooth movement of the spool 24.

The spool 24 is formed substantially in a cup shape, and has a sealing surface 24a as the bottom surface which is brought into sealing contact with the valve seat 20g when the spool 24 is slid in one direction and is moved or spaced away from the valve seat 20g when the spool 24 is slid in the other opposite direction. The outside diameter of the spool 24 of FIG 1 is approximately 13 mm. The spool 24 also has a taper surface 24r around the sealing surface 24a. The size of the taper surface 24r in the sliding direction of the spool 24 is much smaller than the length in the sliding direction of the spool 24 and is negligibly small. Symbol "a" in FIG. 1 designates the distance as measured in the sliding direction of the spool 24 between the sealing surface 24a and the apex angle 22c of the opening 22 when the sealing surface 24a of the spool 24 is seated on the valve seat 20g of the valve seat member 20. The check valve 10 of the example is constructed such that the length "a" is approximately 10 mm.

With the spool 24 fitted in the case 22, a throttle 26 is formed between an inner peripheral surface 22e of the case 22 and an outer peripheral surface 24f of the spool 24 to enable a small amount of fluid to pass therethrough. That is, in the range in which the spool 24 slides the length "a" from the state in which the spool 24 is seated on the valve seat 20g toward the opening 22b, the inner peripheral surface 22e of the case 22 and the outer peripheral surface 24f of the spool 24 form the throttle 26 in a space therebetween. The cross-sectional area of the throttle 26 as seen in the direction in which the spool 24 slides (or the cross-sectional area of the throttle 26 as measured in a plane taken on the line X-X of FIG. 1) is much smaller than the area of the opening 22b, for example, approximately 2 mm$^2$. The cross section of the throttle 26 as viewed in the sliding direction of the spool 24 is a ring shape which is formed by the space surrounded between two concentric circles of the inner peripheral surface 22e of the case 22 and the outer peripheral surface 24f of the spool 24. By so constructing, the case 22 and the spool 24 can be made advantageously simple in structure.

As describe above, since the taper surface 24r is negligibly small, the length of the throttle 26 is regarded as the length "a". The effect of the throttle 26 of restricting the flow of the fluid increases as the cross sectional area is decreased and the length "a" is increased. That is, as the cross sectional area is decreased and the length "a" is increased, the flow rate of the throttle 26 to the pressure difference between the flow passage 20f and the outside of the case 22 is decreased.

The spring 25 is held by and between a stepped portion 24p of the spool valve 24 which is formed on the inner peripheral surface thereof adjacent to the valve seat member 20 and a stepped portion 22p of the case 22 which is formed on the inner peripheral surface at the end thereof remote from the stepped portion 24p.

Now, the operation of the check valve 10 according to this example above described will be described. The fluid which has flowed into the flow passage 20f pushes the spool 24 to slide in the direction which causes the spool 24 to be spaced away from the valve seat 20g while overcoming the urging force of the spring 25. Thus, the sealing surface 24a is spaced away from the valve seat 20g of the valve seat member 20 thereby to connect the flow passage 20f to the throttle 26.

When the distance between the sealing surface 24a of the spool 24 and of the valve seat 20g of the valve seat member 20, or lift length "x" is smaller than the length "a" (or x < a), the fluid is flowed from the flow passage 20f into the throttle 26 and then passes through the opening 22b to be discharged out of the case 22. In this case, since the area of the opening 22b is much larger than the cross sectional area of the throttle 26, the flow of the fluid is limited by the throttle 26 while x < a. Therefore, the flow rate is not changed rapidly by the change of the lift length "x", so that the pressure difference between the flow passage 20f and the outside of the case 22 is not changed rapidly either, with the result that the valve hunting is prevented.

When the lift length "x" is increased to become substantially the same as the length "a" (or x = a), the sealing surface 24a of the spool 24 is positioned to correspond to the apex angle 22c of the opening 22b. When the lift length "x" is further increased to exceed the length "a" (or x > a), an opened space is provided adjacent to the apex angle 22c of the opening 22b through which direct fluid communication is established between the interior and exterior of the case 22. Then, the throttle 26 does not work any more and the flow of the fluid is then limited by the opening area of the opening 22b.

As described above, the opening 22b is formed substantially in the shape of an isosceles triangle which has its apex angle 22c on the side adjacent to the valve seat 20g. Therefore, immediately after the lift length "x" exceeds the length "a", the rate of increase of the opening area to the increase of the lift length "x" is relatively small. When the lift length "x" is further increased, the rate of increase of the opening area to the increase of the lift length "x" becomes greater. The opening area increases with an increase of the lift length "x" until the sealing surface 24a of the spool 24 is positioned corresponding to the side 22d of the opening 22b, and thereafter the opening area remains the same corresponding to the area of the opening 22b. Since the area of the opening 22b is relatively large, the loss of flow rate when the flow rate is relatively large is reduced.

Four different test check valves each having the above-described structure but different cross sectional area of the throttle are made and the relation between the pressure difference and the flow rate was determined for the respective check valves. The cross sectional areas of the throttles of the four test check valves were 8.17 mm$^2$, 6.13 mm$^2$, 4.08 mm$^2$ and 2.04 mm$^2$, respectively. It is noted that the pressure difference means the difference between the pressure in the region of the flow passage 20f of the check valve 10 and the pressure in the region outside the case 22 of the check valve 10.

All four test check valves were made of brass, the outside diameter of the spool of each check valve was 13 mm, the length of the throttle, including the tapered length was 10 mm, the number of openings was four, the total area of the openings of each check valve was 30 mm$^2$, and carbon dioxide was used as the fluid. For measurement of the pressure difference and the flow rate, the test check valve was mounted externally of a carbon dioxide compressor. The flow rate of the fluid was measured by a flow meter and the pressure difference by a differential pressure gauge, respectively. It is assumed that the flow rate in the check valve 10 in actual operation is about 7 kg/h or more.

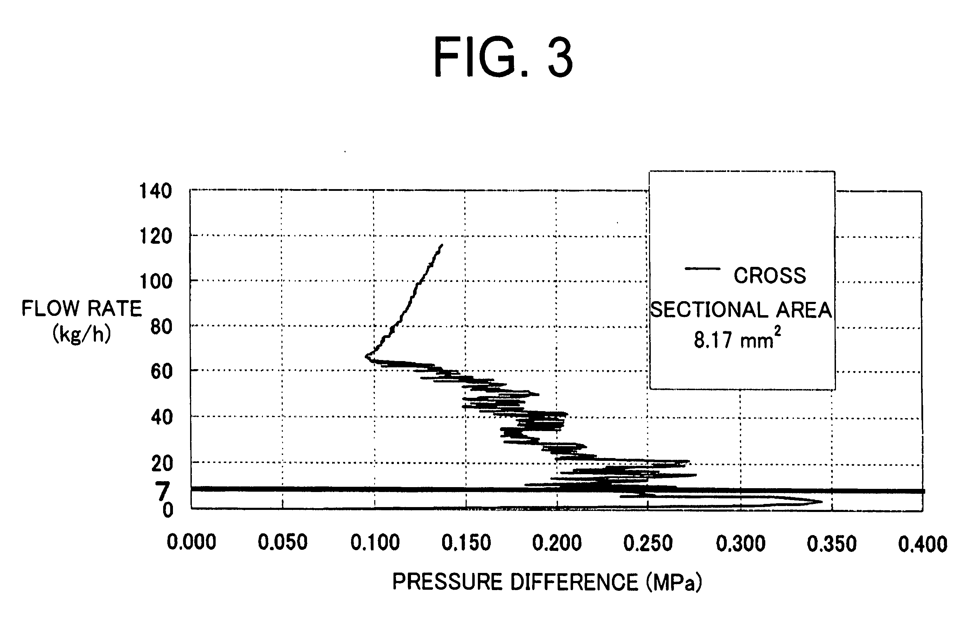

Graphs of the measurement results for the test check valves with throttle areas 8.17 mm$^2$, 6.13 mm$^2$, 4.08 mm$^2$ and 2.04 mm$^2$ are shown in FIGS. 3, 4, 5 and 6, respectively. In the graphs, the horizontal and vertical axes represent the pressure difference (MPa) and the flow rate (kg/h), respectively. In each graph, an auxiliary line is drawn indicating the aforementioned flow rate of 7 kg/h.

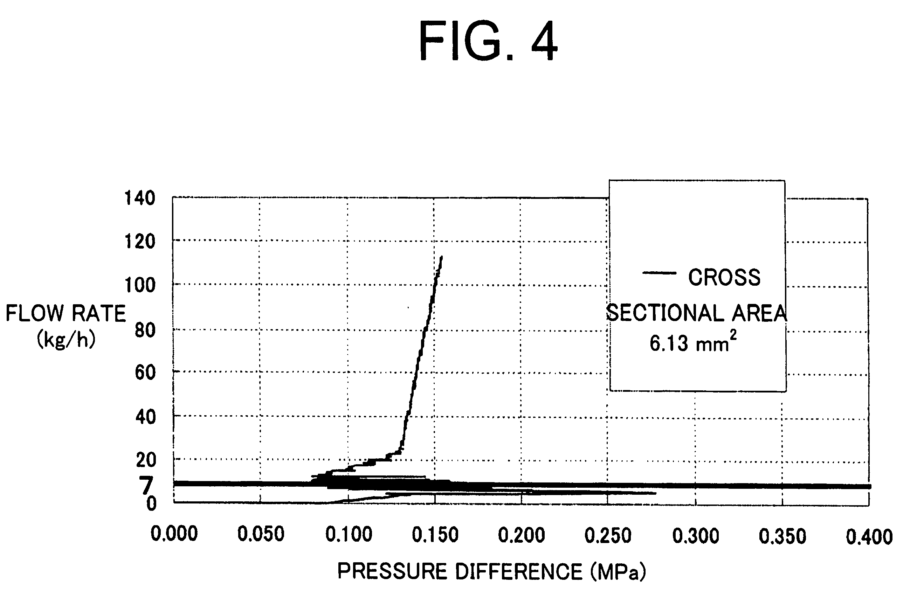

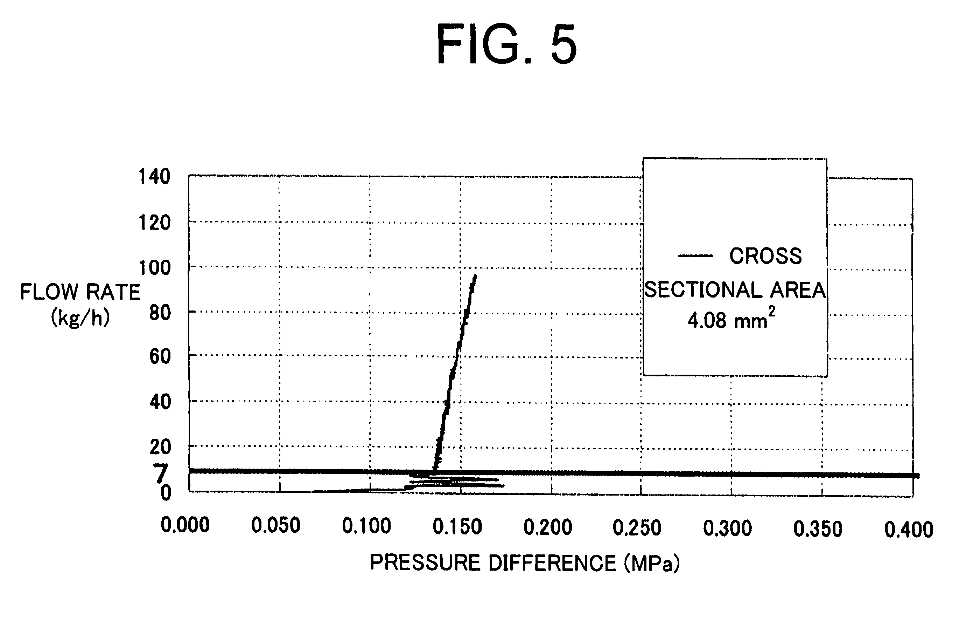

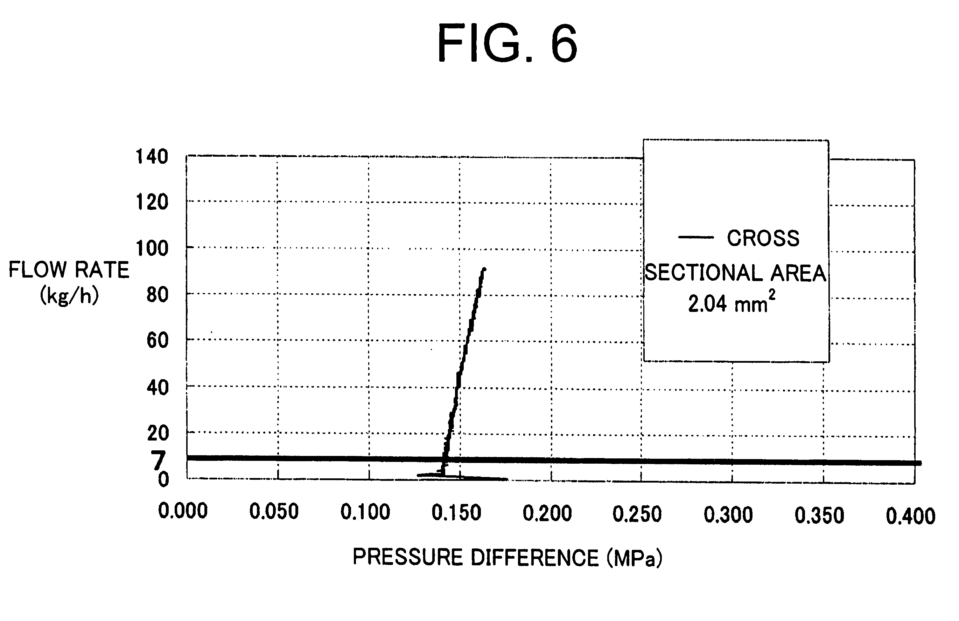

In each graph, the pressure difference is varied significantly while the flow rate hardly changes in the region of a relatively low flow rate, which shows the development of valve hunting. In the graphs for 8.17 mm$^2$ and 6.13 mm$^2$ of FIGS. 3 and 4, the hunting phenomenon is observed in the region in where the flow rate exceeds 7 kg/h. In the graph for 4.08 mm$^2$ of FIG 5, although the hunting phenomenon is observed until just before the flow rate reaches 7 kg/h, the valve operation is stabilized after the flow rate exceeds 7 kg/h. In the graph for 2.04 mm$^2$ of FIG 6, the hunting phenomenon is already stopped in a region where the flow rate is sufficiently below 7 kg/h.

Referring to FIG 3, showing the measurement results for the test check valve whose cross sectional area of the throttle is 8.17 mm$^2$ (approximately 8 mm$^2$), the hunting phenomenon is substantially stopped after the flow rate reaches or exceeds approximately 65 kg/h. Therefore, this value should be set as the flow rate at which valve hunting disappears. The value of minimum pressure difference at which the hunting phenomenon is stopped is approximately 0.095 MPa.

Referring to FIG. 4, showing the measurement results for the test check valve whose cross sectional area of the throttle is 6.13 mm$^2$ (approximately 6 mm$^2$), the hunting phenomenon is substantially stopped after the flow rate reaches or exceeds approximately 25 kg/h. Therefore, this value should be set as the flow rate at which valve hunting disappears. The value of minimum pressure difference at which the hunting phenomenon is stopped is approximately 0.13 MPa.

Referring to FIG. 5, showing the measurement results for the test check valve whose cross sectional area of the throttle is 4.08 mm$^2$ (approximately 4 mm$^2$), the hunting phenomenon is substantially stopped after the flow rate reaches or exceeds approximately 7 kg/h. Therefore, this value should be set as the flow rate at which valve hunting disappears. The value of minimum pressure difference at which the hunting phenomenon is stopped is approximately 0.135 MPa.

Referring to FIG 6, showing the measurement results for the test check valve whose cross sectional area of the throttle is 2.04 mm$^2$ (approximately 2 mm$^2$), the hunting phenomenon is substantially stopped after the flow rate reaches or exceeds approximately 5 kg/h. Therefore, this value should be set as the flow rate at which valve hunting disappears. The value of minimum pressure difference at which the hunting phenomenon is stopped is approximately 0.14 MPa.

Thus, the most suitable cross sectional area for the throttle is selected based on the above minimum flow rate. For example, for the minimum flow rate ranges from approximately 5 kg/h to approximately 7 kg/h, from approximately 7 kg/h to approximately 25 kg/h, from approximately 25 kg/h to approximately 65 kg/h, and approximately 65 kg/h or more, the cross sectional areas are set, at about 2 mm$^2$, 4 mm$^2$, 6 mm$^2$ and 8 mm$^2$, respectively. Thus, in the region of lower flow rate, the valve hunting is prevented more effectively with a decrease of the cross sectional area of the throttle.

A check valve which has no throttle and in which a slight movement of the valve body causes the opening to be opened may be considered to correspond to a check valve having such a throttle whose cross sectional area is approximate to the area of the opening. In this case, since the area of the opening is much larger than that of the throttle 26 of the example, the hunting tends to occur.

As described above, since the check valve 10 of the example is constructed such that the throttle 26 is formed between the flow passage 20f and the opening 22b in the flow passage of the fluid whose flow rate is relatively low, the flow rate is not excessively increased by an increase of the lift length and, therefore, the pressure difference between the flow passage 20f and the outside of the case 22 is not reduced rapidly. Consequently, the hunting is prevented successfully, so that stability in operation of the check valve is ensured.

The throttle 26 of the check valve 10 is formed by and between the inner peripheral surface 22e of the case 22 and the outer peripheral surface 24f of the spool 24. In addition, the throttle 26 is formed such that the pressure difference which enables the spool 24 to be stably slid is maintained between the flow passage 20f and the opening 22b. Further, the throttle 26 is designed to have such a cross sectional area that will not cause valve hunting in the range of flow rates with which the check valve 10 is used.

In the check valve 10 of the example, the following modifications are implemented.

Although the shape of the throttle 26 in the example is concentric circle, the shape of the throttle 26 may be modified to have a different shape. For example, at least one of the case 22 and the spool 24 may have a groove therein to provide the throttle of the present invention.

Although the length in the sliding direction of the spool 24 in the example is set such that the spool 24 seated in contact with the valve seat 20g does not reach the opening 22b, the length may be set such that the spool 24 does not close the opening 22b. Alternatively, the length may be set such that a part or the entirety of the opening 22b is closed by the spool 24.

In a modified example to the example, the number of openings 22b, the shape of each opening 22b and the total area of the openings 22b may be different from those of the first embodiment. In addition, a part or the entirety of the openings 22b may have different shapes from each other and may be spaced at a different distance from the valve seat 20g.

Although in the example the fluid for use in the compressor in which the check valve 10 is incorporated is carbon dioxide, fluid such as chlorofluorocarbon may be employed.

Although in the example the cross section of the case 22 and the spool 24 as seen in the sliding direction of the spool 24 is substantially circular, it may be of any other shape as far as the throttle 26 which enables the spool 24 to be stably slid is formed between the case 22 and the spool 24 as described above. In addition, the case 22 and the spool 24 do not need to be similar in cross sectional shape.

Although the valve seat member 20 and the case 22 are separate members in the example, they may be integrated with each other thereby to form a valve housing.

Although the spool 24 has substantially a hollow cup shape, it may be of a shape having no hollowed space.

In a modified example to the example, the spring 25 may be replaced by an elastic body such as rubber which urges the spool 24 toward the valve seat 20g.

Although the valve seat member 20 of the example has formed therein a cylindrical flow passage 20f, the valve seat member 20 may dispense with the flow passage 20f as far as the valve seat member 20 has the valve seat 20g. A space corresponding to the flow passage 20f may be provided by any suitable member which communicates with the outside of the check valve 10.

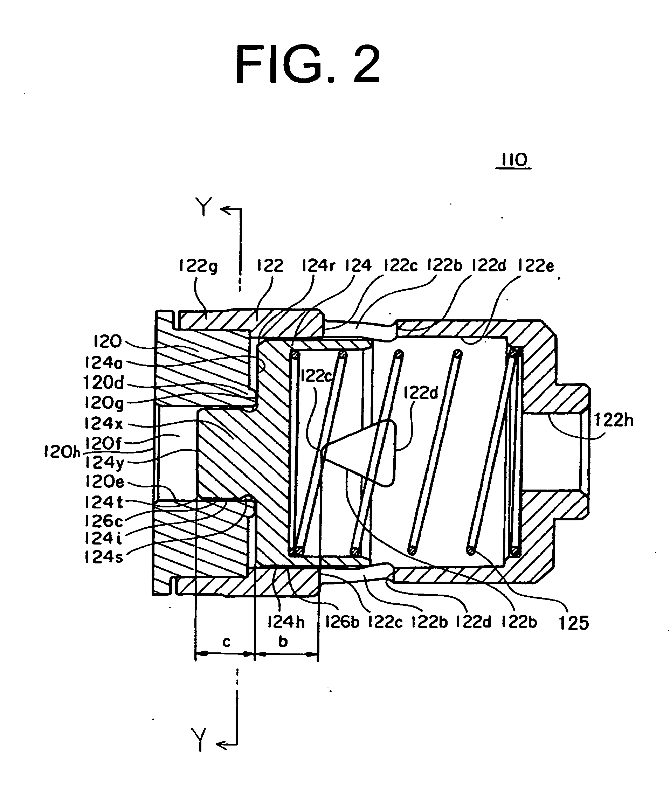

A check valve 110 according to a preferred embodiment of the present invention will now be described with reference to FIG. 2. As is the case with the above described example, the check valve 110 includes a valve seat member 120, a case 122, a spool 124 and a spring 125. The case 122 is fitted over the valve seat member 120. The spool 124 that serves as a valve body is disposed slidably in the case 122. The spring 125 that serves as an urging member urges the spool 124 toward the valve seat member 120 in the case 122. The valve seat member 120 and the case 122 cooperate to form a valve housing.

The valve seat member 120 has a suction port 120h and a flow passage 120f through which the fluid flowed from the suction port 120h passes. The valve seat member 120 also has a seat portion 120e which is provided in the form of a circumferential valve seat 120g having a predetermined width. A flange 122g of the case 122, a communication opening 122b which is formed in the peripheral wall of the case 122 and provided with an apex angle 122c and a side 122d, and a through hole 122h of the case 122 are substantially the same as the counterparts of the example and, therefore, the explanations thereof are omitted.

The spool 124 has a sealing surface 124a which is brought into sealing contact with the valve seat 120g when the spool 124 is slid in one direction and is spaced away from the valve seat 120g when the spool 124 is slid in the other opposite direction. It is noted that the spool 124 is different from the spool 24 of the example in that a protrusion 124x is formed substantially at the center of the sealing surface 124a and slidably fitted in the flow passage 120f.

The spool 124 has a taper surface 124r around the sealing surface 124a. With the sealing surface 124a of the spool 124 seated on the valve seat 120g of the valve seat member 120, the distance in the sliding direction of the spool 124 between the sealing surface 124a and the apex angle 122c of the opening 122b is designated as length "b". It is noted that the size in the sliding direction of the taper surface 124r is much smaller than the length "b" and thus negligibly small.

With the spool 124 fitted in the case 122, a first throttle 126b is formed between an inner peripheral surface 122e of the case 122 and a first outer peripheral surface 124h of the spool 124 to enable a small amount of fluid to pass therethrough. That is, in the range in which the spool 124 slides the length "b" from the state in which the spool 124 is seated on the valve seat 120g toward the opening 122b, the inner peripheral surface 122e of the case 122 and the first outer peripheral surface 124h of the spool 124 form the first throttle 126b in a space therebetween. The cross-sectional area of the first throttle 126b as seen in the sliding direction of the spool 124 (or the cross-sectional area of the first throttle 126b as measured in a plane taken on the line parallel to the line Y-Y of FIG 2) is much smaller than the area of the opening 122b. Since the taper surface 124r is sufficiently small as indicated above, the length in the sliding direction of the first throttle 126b is regarded as the length "b". The cross section of the first throttle 126b as viewed in the sliding direction of the spool 124 is a ring shape which is formed by the space surrounded between two concentric circles of the inner peripheral surface 122e of the case 122 and the first outer peripheral surface 124h of the spool 124. By so constructing, the case 122 and the spool 124 can be made advantageously simple in structure.

The outer peripheral surface of the protrusion 124x of the spool 124, or a second outer peripheral surface 124i, has taper surfaces at the opposite ends thereof, one is the taper surface 124s on the side adjacent to the opening 122b and the other is the taper surface 124t at the distal end of the protrusion 124x. With the sealing surface 124a of the spool 124 seated on the valve seat 120g of the valve seat member 120 as shown in FIG. 2, the distance in the sliding direction of the spool 124 between the sealing surface 124a and a top face 124y of the spool 124 is designated as length "c". It is noted that the size of the taper surfaces 124s, 124t as measured in the sliding direction of the spool 124 is negligibly small as compared with the length "c".

With the protrusion 124x of the spool 124 fitted in the flow passage 120f as shown in FIG. 2, a second throttle 126c is formed between the peripheral surface which forms the flow passage 120f, or an inner peripheral surface 120e of the valve seat member 120, and the second outer peripheral surface 124i of the spool 124, and a small amount of fluid is allowed to flow through the second throttle 126c. That is, at least with the sealing surface 124a placed in contact with the valve seat 120g, the second outer peripheral surface 124i of the protrusion 124x of the spool 124 is fitted within the inner peripheral surface 120e of the flow passage 120f, thus the second throttle 126c being formed between the second outer peripheral surface 124i and the inner peripheral surface 120e.

The cross-sectional area of the second throttle 126c as seen in the sliding direction of the spool 124 (or the cross-sectional area of the second throttle 126c as measured in a plane taken on the line Y-Y of FIG 2) is much smaller than the area of the opening 122b. Since the taper surfaces 124s, 124t are sufficiently small as indicated above, the length of the second throttle 126c as measured in the sliding direction of the spool 124 is regarded as the length "c". The shape of the cross section of the second throttle 126c as viewed in the sliding direction of the spool 124 is concentric circle described by the inner peripheral surface 120e of the valve seat member 120 and the second outer peripheral surface 124i of the spool 124. By so constructing, the valve seat member 120 and the spool 124 can be made advantageously simple in structure.

The first throttle 126b and the second throttle 126c may be formed such that the differences in diameter of the respective two of the concentric circles as seen in the cross section of the first and second throttles 126b, 126c are substantially the same. That is, the following relation is effective.

$$\text{(the inside diameter of the case 122)} - \text{(the diameter of the first outer peripheral surface 124h of the spool 124)} \approx \text{(the inside diameter of the valve seat member 120)} - \text{(the diameter of the second outer peripheral surface 124i of the spool 124)}$$

In this case, since the cross-sectional area of the second throttle 126c is smaller than that of the first throttle 126b, the second throttle 126c, whose length in the sliding direction of the spool valve 124 is smaller than that of the first throttle 126b, can have yet the same throttle effect as the first throttle 126b to restrict the flow of the fluid.

That is, even if the sum of the lengths "b" and "c" in the embodiment of FIG. 2 is smaller than the length "a" in the example of FIG. 1 (or b + c < a), the check valve 110 of the embodiment can have substantially the same throttle effect as the check valve 10 of the example. In the embodiment of FIG. 2, the length "b" is larger than the length "c" (or b > c), although the invention does not intend to limit the dimensional relation of these two lengths.

Since the structure of the spring 125 of the embodiment is substantially the same as that of the spring 25 of the example, its explanation is omitted.

The operation of the check valve 110 of the embodiment will now be described. The fluid which has flowed into the flow passage 120f pushes the spool 124 to slide in the direction which causes the spool 124 to be spaced away from the valve seat 120g while overcoming the urging force of the spring 125. Thus, the sealing surface 124a is spaced away from the valve seat 120g of the valve seat member 120 thereby to connect the second throttle 126c with the first throttle 126b.

When the distance between the sealing surface 124a of the spool 124 and the valve seat 120g of the valve seat member 120, or the lift length "x" is smaller than the length "c" (or x < c), the fluid is flowed from the flow passage 120f into the second throttle 126c and then into the first throttle 126b, and then passes through the opening 122b to be discharged out of the case 122. In this case, since the area of the opening 122b is much larger than the cross sectional area of the first throttle 126b and the second throttle 126c, when the lift length "x" is smaller than the length "c" (or x < c), the flow of the fluid is limited by the first throttle 126b and the second throttle 126c while x < c. Therefore, the flow rate is not changed rapidly by the change of the lift length "x", so that the pressure difference between the flow passage 120f and the outside of the case 122 is not changed rapidly either, with the result that the valve hunting is prevented.

When the lift length "x" is increased to become substantially the same as the length "c" (or x = c), the top face 124y of the spool 124 and the valve seat 120g of the valve seat member 120 are positioned substantially flush with each other. When the lift length "x" is further increased to exceed the length "c" but not to exceed the sum of the lengths "b" and "c"(or c < x < b + c), the protrusion 124x of the spool 124 is moved completely out of the flow passage 120f, so that the second outer peripheral surface 124i of the spool 124 and the inner peripheral surface 120e of the valve seat member 120 are separated completely from each other, with the result that the second throttle 126c does not work any more.

The fluid is then directly flowed from the flow passage 120f into the case 122, and passes through the first throttle 126b and then the opening 122b to be discharged out of the case 122. When the lift length "x" is larger than the length "c" and smaller than the sum of the lengths "b" and "c" (or c < x < b + c), the flow of the fluid is limited by the first throttle 126b. Therefore, the flow rate is not changed rapidly by the change of the lift length "x", so that the pressure difference between the flow passage 120f and the outside of the case 122 is not changed rapidly either and, therefore, the valve hunting is prevented successfully.

When the lift length "x" is further increased to become substantially the same as the sum of the lengths "b" and "c" (or x = b + c), the sealing surface 124a of the spool 124 is positioned corresponding to the apex angle 122c of the opening 122b. When the lift length "x" is further increased to exceed the sum of the lengths "b" and "c" (or x > b + c), the inside and the outside of the case 122 are directly connected with each other. Then, the effect of the first throttle 126b is nullified, and the flow of the fluid is adjusted by the opening area of the opening 122b. Since the operation of the check valve 110 under the condition where x > b + c is substantially the same as the operation of the check valve 10 of the example under the condition where x > a, the explanation of the check valve operation is omitted.

As described above, since the check valve 110 of the embodiment is constructed such that at least one of the first throttle 126b and the second throttle 126c is formed between the flow passage 120f and the opening 122b in the flow passage of the fluid whose flow rate is relatively low, the flow rate is not excessively increased by an increase of the lift length and, therefore, the pressure difference between the flow passage 120f and the outside of the case 122 is not reduced rapidly. Consequently, the hunting is prevented successfully, so that stability in operation of the check valve is ensured.

The check valve 110 of the embodiment which has the first throttle 126b and the second throttle 126c whose diameter is smaller than that of the first throttle 126b can provide substantially the same throttle effect as the check valve 10 of the example with a reduced length of the throttle in the sliding direction of the spool 124. In addition, the check valve 110 having the second throttle 126c which is formed in the flow passage 120f of the valve seat member 120 can be made compact in size.

In the embodiment, the first throttle 126b is formed between the inner peripheral surface 122e of the case 122 and the first outer peripheral surface 124h of the spool 124, while the second throttle 126c is formed between the second outer peripheral surface 124i of the spool 124 and the inner peripheral surface 120e of the valve seat member 120. The first throttle 126b and the second throttle 126c are formed such that the pressure difference which enables the spool 124 to be stably slid is maintained between the flow passage 120f and the opening 122b. Further, the first throttle 126b and the second throttle 126c are designed to have such a cross sectional area that will not cause valve hunting in the range of flow rates with which the check valve 110 is used.

In the check valve 110 of the preferred embodiment, the following modifications are implemented.

Regarding the length "b" of the first throttle 126b and the length "c" of the second throttle 126c, although the length "b" is larger than the length "c" (or b > c) in the embodiment of FIG. 2, the length "b" may be substantially the same as or larger than the length "c" (or b≤ c). When the magnitude relation between the length "b" and the length "c" is changed, the order in which the first throttle 126b and the second throttle 126c stop performing the function of a throttle will be changed. However, such change of the order has no influence on the effect of preventing the hunting in operation of the check valve under a relatively low flow rate.

Although the length in the sliding direction of the spool 124 in the embodiment is set such that the spool 124 seated in contact with the valve seat 120g closes a part of the opening 122b, the length in the sliding direction of the spool 124 may be set such that the spool 124 does not close the opening 122b. Alternatively, the length may be set such that the entirety of the opening 122b is closed by the spool 124.

In a modified example to the embodiment, the number of openings 122b, the shape of each opening 122b and the total area of the openings 122b may be different from those of the embodiment. In addition, a part or the entirety of the openings 122b may have shapes different from each other and may be spaced at a different distance from the valve seat 120g.

Although in the embodiment the fluid for use in the compressor in which the check valve 110 is incorporated is carbon dioxide, fluid such as chlorofluorocarbon may be employed.

Although in the embodiment the cross section of the case 122 and the spool 124 as seen in the sliding direction of the spool 124 is substantially circular, it may be of any other shape as far as the first throttle 126b and the second throttle 126c which enable the spool 124 to be stably slid are formed between the case 122 and the spool 124 as described above. In addition, the case 122 and the spool 124 do not need to be similar in cross sectional shape. Further, the shape of the first throttle 126b may be different from that of the second throttle 126c.

Although in the embodiment the valve seat member 120 and the case 122 are separate members, they may be integrated with each other thereby to form a valve housing.

The spool 124 having substantially a hollowed cup shape in the embodiment, it may be modified so as to dispense with the hollowed space.

Furthermore, the spring 125 may be substituted with an elastic body such as rubber which urges the spool 124 toward the valve seat 120g.

Therefore, the present examples and embodiments are to be considered as illustrative and not restrictive and the invention is not to be limited to the details given herein but may be modified as defined in the appended claims.

The check valve includes a valve housing, a valve body and an urging member. The valve housing has a peripheral wall and a valve seat. The peripheral wall has an opening therethrough for fluid communication. The opening is located more downstream than the valve seat. The end of the opening on the side of the valve seat is spaced at a predetermined length in a direction in which the valve body is spaced away from the valve seat. A first throttle is formed in a space between an inner peripheral surface of the valve housing and an outer peripheral surface of the valve body until the valve body is slid in the direction for the predetermined length from the state in which the valve body is seated on the valve seat.

**Claims**

1. A check valve comprising

   a valve housing (120, 122),
   a valve body (124) and
   an urging member (125),
   the valve housing (120, 122) having a peripheral wall (122) and a valve seat (120g), the peripheral wall (122) having an opening (122b) therethrough for fluid communication the opening (122b) being located downstream of the valve seat (120g), the peripheral wall (122) also having an inner peripheral surface (122e),
   the valve body (124) being disposed slidably in the valve housing (120, 122), the valve body (124) having an outer peripheral surface (124h) which is fitted in the inner peripheral surface (122e) of the valve housing (120, 122), the valve body (124) also having a sealing surface (124a) which is seated on the valve seat (120g) when the valve body (124) is slid in a first direction, the sealing surface (124a) being spaced away from the valve seat (120g) when the valve body (124) is slid in a second direction which is opposite to the first direction, the urging member (125) being disposed in the valve housing (120, 122) for urging the valve body (124) in the first direction,

   wherein the end (122c) of the opening (122b) on the side of the valve seat (120g) is spaced at a predetermined length (b) in the second direction from the valve seat (120g),
   wherein a first throttle (126b) is formed in a space between the inner peripheral surface (122e) of the valve housing (120, 122) and the outer peripheral surface (124h) of the valve body (124) until the valve body (124) is slid in the second direction for the predetermined length (b) from the state in which the valve body (124) is seated on the valve seat (120g),

wherein the valve body (124) has a protrusion (124x) that protrudes from the inside of a portion of the sealing surface (124a) which is contacted with the valve seat (120g),

wherein at least when the sealing surface (124a) is contacted with the valve seat (120g), an outer peripheral surface (124i) of the protrusion (124x) is fitted in an inner peripheral surface of a flow passage (120f) of the valve housing (120, 122) between the valve seat (120g) and a suction port (120h),

wherein a second throttle (126c) is formed in a space between the outer peripheral surface (124i) of the protrusion (124x) and the inner peripheral surface of the flow passage (120f), and

wherein an area of the cross section of the second throttle (126c) as seen in the second direction is smaller than that of the first throttle (126b),

**characterized in that**,

the length in the second direction of the first throttle (126b) is larger than the length of the second throttle (126c).

2. The check valve according to claim 1, wherein the valve housing (120, 122) has a first end and a second end which are connected by the peripheral wall (122), the first end having the suction port (120h), the valve seat (120g) being located nearer to the second end than the suction port (120h), the opening (122b) being located nearer to the second end than the valve seat (120g), the end (122c) of the opening (122b) on the side of the valve seat (120g) being spaced at the predetermined length (b) toward the second end from a portion of the peripheral wall (122) which corresponds to the end of the outer peripheral surface (124h) of the valve body (124) on the side of the first end when the sealing surface (124a) of the valve body (124) is seated on the valve seat (120g), the first throttle (126b) being formed in a range in which the valve body (124) is slid in the second direction for the predetermined length (b) from the state in which the valve body (124) is seated on the valve seat (120g).

3. The check valve according to claim 1, wherein at least one of cross sections of the first throttle (126b) and the second throttle (126c) as seen in the second direction has a ring shape.

4. The check valve according to any one of claims 1 through 3, wherein a length in the second direction of the valve body (124) is set such that the valve body (124) closes a part of the opening (122b) when the valve body (124) is seated on the valve seat (120g).

5. The check valve according to any one of claims 1 through 4, wherein the length in the second direction of the valve body (124) is set such that the valve body (124) does not close the opening (122b) when the valve body (124) is seated on the valve seat (120g).

6. The check valve according to any one of claims 1 through 5, wherein the valve housing (120, 122) has a valve seat member (120) and a case (122) which are separate members.

7. The check valve according to any one of claims 1 through 6, wherein the number of the openings (122b) is a plurality.

8. The check valve according to any one of claims 1 through 7, wherein the opening (122b) is formed substantially in the shape of an isosceles triangle.

**Patentansprüche**

1. Rückschlagventil mit

   einem Ventilgehäuse (120, 122),
   einem Ventilkörper (124), und
   einem Drängbauteil (125),

   wobei das Ventilgehäuse (120, 122) eine Umfangswand (122) und einen Ventilsitz (120g) hat, wobei die Umfangswand (122) eine Öffnung (122b) durch diese hindurch zur Fluidverbindung hat, wobei die Öffnung (122b) stromabwärts des Ventilsitzes (120g) angeordnet ist, wobei die Umfangswand (122) ferner eine innere Umfangsfläche (122e) hat,

   wobei der Ventilkörper (124) gleitend in dem Ventilgehäuse (120, 122) angeordnet ist, wobei der Ventilkörper (124) eine äußere Umfangsfläche (124h) hat, die an der inneren Umfangsfläche (122e) des Ventilgehäuses (120, 122) eingepasst ist, wobei der Ventilkörper (124) ferner eine Dichtfläche (124a) hat, die auf den Ventilsitz (120g) gesetzt wird, wenn der Ventilkörper (124) in einer ersten Richtung gleitet,

wobei die Dichtfläche (124a) von dem Ventilsitz (120g) beabstandet wird, wenn der Ventilkörper (124) in einer zweiten Richtung gleitet, die zu der ersten Richtung entgegengesetzt ist, wobei das Drängbauteil (125) in dem Ventilgehäuse (120, 122) zum Drängen des Ventilkörpers (124) in die erste Richtung angeordnet ist,

wobei das Ende (122c) der Öffnung (122b) an der Seite des Ventilsitzes (120g) mit einer vorbestimmten Länge (b) in der zweiten Richtung von dem Ventilsitz (120g) beabstandet ist,

wobei eine erste Drossel (126b) in einem Raum zwischen der inneren Umfangsfläche (122e) des Ventilgehäuses (120, 122) und der äußeren Umfangsfläche (124h) des Ventilkörpers (124) ausgebildet ist, während der Ventilkörper (124) in der zweiten Richtung um die vorbestimmte Länge (b) aus dem Zustand gleitet, in dem der Ventilkörper (124) auf dem Ventilsitz (120g) sitzt,

wobei der Ventilkörper (124) einen Vorsprung (124x) hat, der von dem Inneren eines Abschnitts der Dichtfläche (124a) vorsteht, die mit dem Ventilsitz (120g) in Kontakt ist,

wobei, zumindest wenn die Dichtfläche (124a) mit dem Ventilsitz (120g) in Kontakt ist, eine äußere Umfangsfläche (124i) des Vorsprungs (124x) an einer inneren Umfangsfläche eines Strömungsdurchgangs (120f) des Ventilgehäuses (120, 122) zwischen dem Ventilsitz (120g) und einem Sauganschluss (120h) eingepasst ist,

wobei eine zweite Drossel (126c) in einem Raum zwischen der äußeren Umfangsfläche (124i) des Vorsprungs (124x) und der inneren Umfangsfläche des Strömungsdurchgangs (120f) ausgebildet ist, und

wobei eine Fläche des Querschnitts der zweiten Drossel (126c), wenn diese aus der zweiten Richtung betrachtet wird, kleiner als die der ersten Drossel (126b) ist,

**dadurch gekennzeichnet, dass**

die Länge in der zweiten Richtung der ersten Drossel (126b) größer als die Länge der zweiten Drossel (126c) ist.

2.  Rückschlagventil gemäß Anspruch 1, wobei das Ventilgehäuse (120, 122) ein erstes Ende und ein zweites Ende hat, die durch die Umfangswand (122) verbunden sind, wobei das erste Ende den Sauganschluss (120h) hat, wobei der Ventilsitz (120g) näher zu dem zweiten Ende als der Sauganschluss (120h) angeordnet ist, wobei die Öffnung (122b) näher zu dem zweiten Ende als der Ventilsitz (120g) angeordnet ist, wobei das Ende (122c) der Öffnung (122b) an der Seite des Ventilsitzes (120g) mit der vorbestimmten Länge (b) in Richtung des zweiten Endes von einem Abschnitt der Umfangswand (122) beabstandet ist, der zu dem Ende der äußeren Umfangsfläche (124h) des Ventilkörpers (124) an der Seite des ersten Endes korrespondiert, wenn die Dichtfläche (124a) des Ventilkörpers (124) auf dem Ventilsitz (120g) sitzt, wobei die erste Drossel (126b) in einem Bereich ausgebildet ist, in dem der Ventilkörper (124) in der zweiten Richtung um die vorbestimmte Länge (b) aus dem Zustand gleitet, in dem der Ventilkörper (124) auf den Ventilsitz (120g) sitzt.

3.  Rückschlagventil gemäß Anspruch 1, wobei zumindest einer der Querschnitte der ersten Drossel (126b) und der zweiten Drossel (126c), wenn diese aus der zweiten Richtung betrachtet werden, eine Ringform hat.

4.  Rückschlagventil gemäß einem der Ansprüche 1 bis 3, wobei eine Länge in der zweiten Richtung des Ventilkörpers (124) derart festgelegt ist, dass der Ventilkörper (124) einen Teil der Öffnung (122b) schließt, wenn der Ventilkörper (124) auf dem Ventilsitz (120g) sitzt.

5.  Rückschlagventil gemäß einem der Ansprüche 1 bis 4, wobei die Länge in der zweiten Richtung des Ventilkörpers (124) derart festgelegt ist, dass der Ventilkörper (124) die Öffnung (122b) nicht schließt, wenn der Ventilkörper (124) auf dem Ventilsitz (120g) sitzt.

6.  Rückschlagventil gemäß einem der Ansprüche 1 bis 5, wobei das Ventilgehäuse (120, 122) ein Ventilsitzbauteil (120) und ein Gehäuse (122) hat, die getrennte Bauteile sind.

7.  Rückschlagventil gemäß einem der Ansprüche 1 bis 6, wobei die Anzahl der Öffnungen (122) eine Vielzahl ist.

8.  Rückschlagventil gemäß einem der Ansprüche 1 bis 7, wobei die Öffnung (122b) im Wesentlichen in der Form eines gleichschenkligen Dreiecks ausgebildet ist.

## Revendications

1.  Clapet anti-retour comprenant

un logement de clapet (120, 122),

un corps de clapet (124) et

un élément de poussée (125),

le logement de clapet (120, 122) possédant une paroi périphérique (122) et un siège de clapet (120g), la paroi périphérique (122) possédant une ouverture (122b) à travers celle-ci pour une communication fluide, l'ouverture (122b) étant positionnée en aval du siège de clapet (120g), la paroi périphérique (122) possédant également une surface périphérique intérieure (122e),

le corps de clapet (124) étant disposé de façon coulissante dans le logement de clapet (120, 122), le corps de clapet (124) possédant une surface périphérique extérieure (124h) qui est installée dans la surface périphérique intérieure (122e) du logement de clapet (120, 122), le corps de clapet (124) possédant également une surface d'étanchéité (124a) qui est assise sur le siège de clapet (120g) lorsque le corps de clapet (124) coulisse dans une première direction, la surface d'étanchéité (124a) étant espacée du siège de clapet (120g) lorsque le corps de clapet (124) coulisse dans une seconde direction qui est opposée à la première direction, l'élément de poussée (125) étant disposé dans le logement de clapet (120, 122) pour pousser le corps de clapet (124) dans la première direction,

dans lequel l'extrémité (122c) de l'ouverture (122b) sur le côté du siège de clapet (120g) est espacée à une longueur prédéterminée (b) dans la seconde direction à partir du siège de clapet (120g),

dans lequel un premier élément d'étranglement (126b) est formé dans un espace entre la surface périphérique intérieure (122e) du logement de clapet (120, 122) et la surface périphérique extérieure (124h) du corps de clapet (124) jusqu'à ce que le corps de clapet (124) coulisse dans la seconde direction selon la longueur prédéterminée (b) à partir de l'état dans lequel le corps de clapet (124) est assis sur le siège de clapet (120g),

dans lequel le corps de clapet (124) possède une protubérance (124x) qui fait saillie à partir de l'intérieur d'une partie de la surface d'étanchéité (124a) qui entre en contact avec le siège de clapet (120g),

dans lequel au moins lorsque la surface d'étanchéité (124a) entre en contact avec le siège de clapet (120g), une surface périphérique extérieure (124i) de la protubérance (124x) est installée dans une surface périphérique intérieure d'un passage d'écoulement (120f) du logement de clapet (120, 122) entre le siège de clapet (120g) et un orifice d'aspiration (120h),

dans lequel un second élément d'étranglement (126c) est formé dans un espace entre la surface périphérique extérieure (124i) de la protubérance (124x) et la surface périphérique intérieure du passage d'écoulement (120f), et

dans lequel une superficie de la section transversale du second élément d'étranglement (126c) telle qu'elle est vue dans la seconde direction est inférieure à celle du premier élément d'étranglement (126b),

**caractérisé en ce que**,

la longueur dans la seconde direction du premier élément d'étranglement (126b) est supérieure à la longueur du second élément d'étranglement (126c).

2. Clapet anti-retour selon la revendication 1, dans lequel le logement de clapet (120, 122) possède une première extrémité et une seconde extrémité qui sont reliées par la paroi périphérique (122), la première extrémité possédant l'orifice d'aspiration (120h), le siège de clapet (120g) étant positionné plus près de la seconde extrémité que l'orifice d'aspiration (120h), l'ouverture (122b) étant positionnée plus près de la seconde extrémité que le siège de clapet (120g), l'extrémité (122c) de l'ouverture (122b) sur le côté du siège de clapet (120g) étant espacée selon la longueur prédéterminée (b) vers la seconde extrémité à partir d'une partie de la paroi périphérique (122) qui correspond à l'extrémité de la surface périphérique extérieure (124h) du corps de clapet (124) sur le côté de la première extrémité lorsque la surface d'étanchéité (124a) du corps de clapet (124) est assise sur le siège de clapet (120g), le premier élément d'étranglement (126b) étant formé dans une plage dans laquelle le corps de clapet (124) coulisse dans la seconde direction selon la longueur prédéterminée (b) à partir de l'état dans lequel le corps de clapet (124) est assis sur le siège de clapet (120g).

3. Clapet anti-retour selon la revendication 1, dans lequel au moins une des sections transversales du premier élément d'étranglement (126b) et du second élément d'étranglement (126c) telles qu'elles sont vues dans la seconde direction possède une forme annulaire.

4. Clapet anti-retour selon l'une quelconque des revendications 1 à 3, dans lequel une longueur dans la seconde direction du corps de clapet (124) est établie de sorte que le corps de clapet (124) ferme une partie de l'ouverture (122b) lorsque le corps de clapet (124) est assis sur le siège de clapet (120g).

5. Clapet anti-retour selon l'une quelconque des revendications 1 à 4, dans lequel la longueur dans la seconde direction du corps de clapet (124) est établie de sorte que le corps de clapet (124) ne ferme pas l'ouverture (122b) lorsque le corps de clapet (124) est assis sur le siège de clapet (120g).

6. Clapet anti-retour selon l'une quelconque des revendications 1 à 5, dans lequel le logement de clapet (120, 122) possède un élément de siège de clapet (120) et un boîtier (122) qui sont des éléments séparés.

7. Clapet anti-retour selon l'une quelconque des revendications 1 à 6, dans lequel le nombre des ouvertures (122b) est une pluralité.

8. Clapet anti-retour selon l'une quelconque des revendications 1 à 7, dans lequel l'ouverture (122b) présente sensiblement la forme d'un triangle isocèle.

# FIG. 1

EP 1 628 056 B1

# FIG. 2

FIG. 3

FLOW RATE (kg/h)

140
120
100
80
60
40
20
7
0

CROSS SECTIONAL AREA 8.17 mm$^2$

0.000   0.050   0.100   0.150   0.200   0.250   0.300   0.350   0.400

PRESSURE DIFFERENCE (MPa)

# FIG. 4

EP 1 628 056 B1

# FIG. 5

EP 1 628 056 B1

# FIG. 6

EP 1 628 056 B1

# FIG. 7 (PRIOR ART)

510
522
522b
522c
525
524
524a
520g
520
520f

# FIG. 8 (PRIOR ART)

**EP 1 628 056 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3120606 A
- DE 19540529 A
- GB 884537 A
- JP 2000346217 A